(19) Europäisches Patentamt / European Patent Office / Office européen des brevets

(11) **EP 4 070 444 B1**

(12) **EUROPÄISCHE PATENTSCHRIFT**

(45) Veröffentlichungstag und Bekanntmachung des Hinweises auf die Patenterteilung:
**24.05.2023 Patentblatt 2023/21**

(21) Anmeldenummer: **21713949.2**

(22) Anmeldetag: **23.03.2021**

(51) Internationale Patentklassifikation (IPC):
**H02M 1/42** (2007.01)   **H02M 3/156** (2006.01)
**H02M 3/158** (2006.01)   **H02M 7/48** (2007.01)
**H02M 1/00** (2006.01)

(52) Gemeinsame Patentklassifikation (CPC):
**H02M 3/156; H02M 1/007; H02M 7/48;**
H02M 1/0025; Y02E 10/56

(86) Internationale Anmeldenummer:
**PCT/EP2021/057485**

(87) Internationale Veröffentlichungsnummer:
**WO 2021/191232 (30.09.2021 Gazette 2021/39)**

(54) **VERFAHREN ZUM BETREIBEN EINES WECHSELRICHTERS UND WECHSELRICHTER ZUR DURCHFÜHRUNG DES VERFAHRENS**

METHOD FOR OPERATING AN INVERTER AND INVERTER FOR EXECUTING THE METHOD

PROCÉDÉ DE FONCTIONNEMENT D'UN ONDULEUR ET ONDULEUR PERMETTANT DE METTRE EN OEUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2020 EP 20165328**

(43) Veröffentlichungstag der Anmeldung:
**12.10.2022 Patentblatt 2022/41**

(73) Patentinhaber: FRONIUS INTERNATIONAL GmbH
**4643 Pettenbach (AT)**

(72) Erfinder:
• **GRASBÖCK, Richard**
  **4643 Pettenbach (AT)**
• **METZNER, Wolfgang**
  **4643 Pettenbach (AT)**
• **RITZBERGER, Gerald**
  **4643 Pettenbach (AT)**
• **WIESER, Stefan**
  **4643 Pettenbach (AT)**

(74) Vertreter: **SONN Patentanwälte OG**
**Riemergasse 14**
**1010 Wien (AT)**

(56) Entgegenhaltungen:
DE-A1-102006 010 694   DE-A1-102016 220 204
DE-A1-102018 103 345   US-A1- 2010 157 632

## Beschreibung

Die Erfindung betrifft ein Verfahren nach Anspruch 1 zum Betreiben eines Wechselrichters zur Umwandlung einer Gleichspannung in eine Wechselspannung, wobei mit zumindest einem durch einen Aufwärtswandler gebildeten DC/DC-Wandler eine am DC-Eingang des Aufwärtswandlers anliegenden Eingangsspannung einer DC-Quelle in eine um einen Spannungshub höhere Ausgangsspannung umgewandelt wird, mit den Ausgangsspannungen aller Aufwärtswandler ein Zwischenkreis mit einem Zwischenkreiskondensator mit einer Zwischenkreisspannung gespeist wird, die Zwischenkreisspannung über einen DC/AC-Wandler in die Wechselspannung umgewandelt und an einen mit einem Versorgungsnetz und bzw. oder Verbrauchern verbundenen AC-Ausgang angelegt wird, wodurch der Zwischenkreisspannung am Zwischenkreiskondensator ein Spannungsrippel überlagert wird, wobei in jedem Aufwärtswandler mit zumindest einer Drossel, einem Schalter, einer Diode und einem Ausgangskondensator der Schalter über eine Steuereinrichtung mit einer bestimmten Schaltfrequenz und einem bestimmten Tastverhältnis ein- und ausgeschaltet wird, sodass die Ausgangsspannung jedes Aufwärtswandlers einem zwischen einer maximalen Zwischenkreisspannung und einer minimalen Zwischenkreisspannung liegenden Sollwert der Zwischenkreisspannung entspricht, und wobei die Eingangsspannung jedes Aufwärtswandlers und die Zwischenkreisspannung samt Spannungsrippel gemessen wird.

Ebenso betrifft die Erfindung einen Wechselrichter nach Anspruch 8 zur Umwandlung einer Gleichspannung in eine Wechselspannung, mit zumindest einem durch einen Aufwärtswandler gebildeten DC/DC-Wandler zur Umwandlung einer am DC-Eingang des Aufwärtswandlers anliegenden Eingangsspannung einer DC-Quelle in eine um einen Spannungshub höhere Ausgangsspannung, einem mit den Ausgangsspannungen aller Aufwärtswandler gespeisten Zwischenkreis mit einem Zwischenkreiskondensator, einem DC/AC-Wandler und einem AC-Ausgang zur Verbindung mit einem Versorgungsnetz und bzw. oder Verbrauchern, wodurch der Zwischenkreisspannung am Zwischenkreiskondensator ein Spannungsrippel überlagerbar ist, wobei jeder Aufwärtswandler eine Drossel, einen Schalter, eine Diode und einen Ausgangskondensator aufweist, und mit einer Steuereinrichtung, die zum Ein- und Ausschalten des Schalters jedes Aufwärtswandlers mit einer bestimmten Schaltfrequenz und einem bestimmten Tastverhältnis ausgebildet ist, sodass die Ausgangsspannung jedes Aufwärtswandlers einem zwischen einer maximalen Zwischenkreisspannung und einer minimalen Zwischenkreisspannung liegenden Sollwert der Zwischenkreisspannung entspricht, wobei eine Spannungsmesseinrichtung zur Messung der Eingangsspannung jedes Aufwärtswandlers und eine Spannungsmesseinrichtung zur Messung der Zwischenkreisspannung samt Spannungsrippel vorgesehen ist.

Die Erfindung bezieht sich auf Wechselrichter, die zur Umwandlung der Gleichspannung verschiedener Gleichspannungsquellen bzw. DC-Quellen, wie Photovoltaik-Modulen, Windgeneratoren, Batterien, etc. in eine geeignete Wechselspannung zur Einspeisung in ein Versorgungsnetz und bzw. oder zur Versorgung von Verbrauchern mit elektrischer Energie, dienen. Üblicherweise sind die im Wechselrichter angeordneten DC/DC-Wandler durch sogenannte Aufwärtswandler, Hochsetzsteller bzw. Booster gebildet, welche die Eingangsspannung der jeweiligen DC-Quelle in eine höhere Ausgangsspannung umwandeln, welche den Zwischenkreis des Wechselrichters speisen. Der Faktor, um welchen die Ausgangsspannung höher ist, wie die Eingangsspannung, wird Spannungshub bezeichnet. Der Aufwärtswandler beinhaltet neben einer Drossel, einer Diode und einem Ausgangskondensator einen Schalter, der über eine Steuereinrichtung mit einer bestimmten Schaltfrequenz und einem bestimmten Tastverhältnis ein- und ausgeschaltet wird, sodass die Eingangsspannung entsprechend dem gewünschten Spannungshub in eine entsprechende Ausgangsspannung umgewandelt werden kann. Je nach gewünschter Zwischenkreisspannung im Wechselrichter wird normalerweise mit fixem Spannungshub gearbeitet. Wenn die Zwischenkreisspannung nicht dem gewünschten Wert entspricht, also unterhalb oder oberhalb des Sollwerts liegt, wird der Aufwärtswandler deaktiviert. Für die Zwischenkreisspannung existiert üblicherweise ein zulässiger Bereich zwischen einer maximalen Zwischenkreisspannung und einer minimalen Zwischenkreisspannung. Bei Überschreitung der maximalen Zwischenkreisspannung wird der Aufwärtswandler deaktiviert, um den Zwischenkreiskondensator zu schützen. Bei Unterschreitung der minimalen Zwischenkreisspannung erfolgt ebenfalls eine Deaktivierung der Aufwärtswandler, um einen Stromfluss vom Versorgungsnetz in den DC/AC-Wandler zu verhindern.

Üblicherweise arbeiten die Aufwärtswandler des Wechselrichters mit einem fixen Spannungshub. Im Falle eines größeren Eingangsspannungsbereichs des Wechselrichters werden daher die Grenzen der Zwischenkreisspannung relativ rasch erreicht und es muss der jeweiligen Aufwärtswandler deaktiviert werden, wodurch der Aufwärtswandler nur in einem kleinen Arbeitsbereich betrieben werden kann. Gesamt gesehen resultiert dadurch kein optimaler Wirkungsgrad für den Wechselrichter.

Dazu kommt, dass durch die Einspeisung der vom Wechselrichter erzeugten Wechselspannung in das Versorgungsnetz oder das Versorgen von Verbrauchern mit elektrischer Energie der Zwischenkreisspannung ein Wechselspannungsanteil, ein sogenannter Spannungsrippel, mit der doppelten Netzfrequenz überlagert wird. Somit schwankt die Zwischenkreisspannung mit der doppelten Netzfrequenz entsprechend der Amplitude des Spannungsrippels in Abhängigkeit der Leistungseinspeisung in das Versorgungsnetz oder die Verbraucher. Dadurch werden bei einem fixen Spannungshub der Aufwärtswandler des Wechselrichters die Grenzen der Zwischenkreisspannung noch rascher erreicht, wodurch keine optimale Ausnützung des Aufwärtswandlers und somit ein schlechterer Wirkungsgrad des Wechselrichters resultiert.

Beispielsweise beschreibt die EP 2 375 552 A1 ein Verfahren zum Betreiben eines Wechselrichters, wobei die Zwischenkreisspannung für eine Optimierung des Wirkungsgrades auf einen möglichst niedrigen Wert eingestellt wird.

Ein Verfahren zum Betreiben eines Wechselrichters und ein Wechselrichter ist auch aus der US 2010/0157632 A1 bekannt geworden. Dabei wird der Eingangs-DC/DC-Wandler in Abhängigkeit der gemessenen Eingangsspannung der DC-Quelle geregelt, um einen konstanten Leistungsfluss zu erzielen. Der Sollwert der Zwischenkreisspannung entspricht einer fix eingestellten Referenzspannung. Um Verzerrungen im Wechselstromausgangssignal zu verhindern, kann die Zwischenkreisspannung über eine zusätzliche Einrichtung bei Bedarf angepasst werden.

Die Aufgabe der vorliegenden Erfindung besteht in der Schaffung eines Verfahrens zum Betreiben eines Wechselrichters und eines Wechselrichters zur Durchführung des Verfahrens, womit der Eingangsspannungsbereich besser ausgenützt und der Wirkungsgrad des Wechselrichters noch weiter optimiert werden kann. Nachteile des Standes der Technik sollen vermieden oder zumindest reduziert werden.

Diese Aufgabe wird in verfahrensmäßiger Hinsicht dadurch gelöst, dass ein minimaler Spannungshub jedes Aufwärtswandlers in Abhängigkeit der gemessenen Eingangsspannung des jeweiligen Aufwärtswandlers und des gemessenen Spannungsrippels der Zwischenkreisspannung dynamisch berechnet wird, und der Schalter jedes Aufwärtswandlers mit der bestimmten Schaltfrequenz und dem bestimmten Tastverhältnis ein- und ausgeschaltet wird, sodass die Eingangsspannung entsprechend dem berechneten Spannungshub in eine entsprechende Ausgangsspannung umgewandelt wird, die dem Sollwert der Zwischenkreisspannung entspricht, und somit der Sollwert der Zwischenkreisspannung minimiert wird. Durch die laufende Erfassung der Eingangsspannung jedes Aufwärtswandlers und die Messung der Zwischenkreisspannung samt Spannungsrippel kann der minimale Spannungshub, mit dem der Aufwärtswandler die Eingangsspannung erhöht, und damit die Ausgangsspannung als Sollwert der Zwischenkreisspannung laufend, also dynamisch angepasst werden. Dadurch kann eine bessere Ausnützung jedes Aufwärtswandlers des Wechselrichters stattfinden, da durch die Minimierung des Spannungshubs und des Sollwerts der Zwischenkreisspannung der jeweilige Aufwärtswandler mit einem größeren Eingangsspannungsbereich betrieben werden kann. Durch die dynamische Berechnung des Spannungshubs resultiert ein besserer Wirkungsgrad des Wechselrichters. Die Implementierung des Verfahrens ist relativ einfach und kostengünstig möglich.

Gemäß einem weiteren Merkmal der Erfindung wird der Schalter jedes Aufwärtswandlers über die Steuereinrichtung unter Berücksichtigung eines vorgegebenen minimalen Tastverhältnisses mit der bestimmten Schaltfrequenz und dem bestimmten Tastverhältnis ein- und ausgeschaltet. Das zu berücksichtigende minimale Tastverhältnis des Aufwärtswandlers ist durch die Hardware des Aufwärtswandlers, insbesondere die parasitären Kapazitäten des Schalters, bedingt.

Vorteilhafterweise wird der Spannungshub jedes Aufwärtswandlers nach der Gleichung

$$v = 1/(1-D_{min}) + \Delta U_{ZK}/2 . U_{IN}$$

dynamisch berechnet, worin v den Spannungshub, $D_{min}$ das minimale Tastverhältnis des Aufwärtswandlers, $\Delta U_{ZK}$ den Spannungsrippel und $U_{IN}$ die Eingangsspannung des Aufwärtswandlers bezeichnen. Durch diesen einfachen Zusammenhang resultiert eine optimale Ausnützung des Aufwärtswandlers bei gleichzeitig geringem Rechenaufwand für die laufende Ermittlung des Spannungshubs und somit die Festlegung des Sollwerts der Zwischenkreisspannung des Wechselrichters.

Wenn der berechnete Spannungshub jedes Aufwärtswandlers um einen definierten Wert erhöht wird, kann eine Reglerreserve berücksichtigt werden. Die Reglerreserve kann ein bestimmter Absolutwert des Spannungshubs oder ein Relativwert, also ein gewisser Prozentsatz des Spannungshubs, beispielsweise 2%, sein. Durch das Vorsehen einer solchen Reglerreserve kann die Regelbarkeit jedes Aufwärtswandlers gewährleistet werden.

Gemäß einem weiteren Merkmal der Erfindung wird der Eingangsstrom jedes Aufwärtswandlers gemessen, und das minimale Tastverhältnis des Schalters jedes Aufwärtswandlers in Abhängigkeit des gemessenen Eingangsstromes geändert. Je nach Größe des Eingangsstroms des Aufwärtswandlers wird die minimale Schaltzeit des Schalters aufgrund seiner parasitären Kapazität verändert. Bei einem kleineren Eingangsstrom muss das minimale Tastverhältnis des Aufwärtswandlers angehoben werden, wohingegen bei höherem Eingangsstrom eine Absenkung des minimalen Tastverhältnisses stattfinden muss. Somit kann in bestimmten Fällen, beispielsweise in den Morgenstunden bei einem Photovoltaik-Modul als DC-Quelle mit einem geringeren Eingangsstrom eine optimale Anpassung des Spannungshubs des Aufwärtswandlers durch Anpassung des minimalen Tastverhältnisses erfolgen.

Vorzugsweise wird die Eingangsspannung jedes Aufwärtswandlers und die Zwischenkreisspannung samt Spannungsrippel und allenfalls der Strom durch die Drossel mit einer Abtastfrequenz, welche einem Vielfachen der Netzfrequenz der Wechselspannung entspricht, gemessen und daraus der Spannungshub und allenfalls das minimale Tastverhältnis berechnet. Durch eine ausreichend hohe Abtastfrequenz, beispielsweise oberhalb 1 kHz, kann eine optimale Erfassung des Spannungsrippels der Zwischenkreisspannung und somit eine quasi-kontinuierliche dynamische Berechnung des Spannungshubs erreicht werden.

Wenn jeder Aufwärtswandler bidirektional ausgeführt ist, kann dieser auch als Abwärtswandler zur Umwandlung der Ausgangsspannung in eine kleinere Eingangsspannung verwendet werden. In diesem Fall kann der Wechselrichter auch in umgekehrter Richtung verwendet werden, um beispielsweise am Eingang befindliche Batterien vom Versorgungsnetz laden zu können. Auch in diesem Fall findet eine dynamische Berechnung des umgekehrten Spannungshubs bei den Abwärtswandlern als DC/DC-Wandler statt.

Gelöst wird die erfindungsgemäße Aufgabe auch durch einen oben genannten Wechselrichter, wobei die Steuereinrichtung zur dynamischen Berechnung und Minimierung des Spannungshubs jedes Aufwärtswandlers in Abhängigkeit der gemessenen Eingangsspannung des jeweiligen Aufwärtswandlers und des gemessenen Spannungsrippels der Zwischenkreisspannung und die Steuereinrichtung zum Ein- und Ausschalten des Schalters jedes Aufwärtswandlers mit der bestimmten Schaltfrequenz und dem bestimmten Tastverhältnis, sodass die Eingangsspannung entsprechend dem berechneten Spannungshub in eine entsprechende Ausgangsspannung umwandelbar ist, die dem Sollwert der Zwischenkreisspannung entspricht, und somit zur Minimierung des Sollwerts der Zwischenkreisspannung ausgebildet ist. Zu den dadurch erzielbaren Vorteilen wird auf die obige Beschreibung des Verfahrens zum Betreiben des Wechselrichters verwiesen. Da die für die Messung der Eingangsspannung und der Zwischenkreisspannung samt Spannungsrippel notwendigen Einrichtungen üblicherweise in einem Wechselrichter ohnedies vorhanden sind, hält sich der Hardware-technische Aufwand für die Realisierung der Erfindung in Grenzen. Die Verarbeitung der Messwerte und die Berechnung des Spannungshubs und Regelung der Aufwärtswandler des Wechselrichters geschieht üblicherweise softwaremäßig in der Steuereinrichtung des Wechselrichters. Allenfalls muss die Rechenleistung der Steuereinrichtung entsprechend erhöht werden, um die Verarbeitung der Messwerte in der gewünschten Geschwindigkeit und Auflösung zu ermöglichen.

Gemäß einem weiteren Merkmal ist die Steuereinrichtung zum Ein- und Ausschalten des Schalters jedes Aufwärtswandlers mit der bestimmten Schaltfrequenz und dem bestimmten Tastverhältnis unter Berücksichtigung eines vorgegebenen minimalen Tastverhältnisses ausgebildet. Wie bereits oben erwähnt, ist das minimale Tastverhältnis des Aufwärtswandlers durch die Hardware des Aufwärtswandlers, insbesondere die parasitären Kapazitäten des Schalters, verursacht.

Die Steuereinrichtung ist vorzugsweise zur dynamischen Berechnung des Spannungshubs jedes Aufwärtswandlers nach der Gleichung

$$v = 1/(1-D_{min}) + \Delta U_{ZK}/2 . U_{IN}$$

ausgebildet. Wie bereits oben beschrieben, stellt dies eine einfach implementierbare Berechnung des minimalen Spannungshubs und somit des minimalen Sollwerts der Zwischenkreisspannung des Wechselrichters dar.

Wenn die Steuereinrichtung zur Erhöhung des berechneten Spannungshubs jedes Aufwärtswandlers um einen definierten Wert ausgebildet ist, kann eine Reglerreserve berücksichtigt und die Regelbarkeit des Aufwärtswandlers gewährleistet werden.

Gemäß einem weiteren Merkmal der Erfindung ist eine Strommesseinrichtung zur Messung des Eingangsstroms jedes Aufwärtswandlers vorgesehen, und die Steuereinrichtung zur Änderung des minimalen Tastverhältnisses des Schalters jedes Aufwärtswandlers in Abhängigkeit des gemessenen Eingangsstromes ausgebildet. Wie bereits oben erwähnt, kann dadurch eine Anpassung des minimalen Tastverhältnisses des Aufwärtswandlers und eine noch bessere Ausnützung des Eingangsspannungsbereichs des Aufwärtswandlers und somit Erhöhung des Wirkungsgrades erreicht werden.

Die Spannungsmesseinrichtung ist vorzugsweise zur Messung der Eingangsspannung jedes Aufwärtswandlers, die Spannungsmesseinrichtung zur Messung der Zwischenkreisspannung samt Spannungsrippel und allenfalls die Strommesseinrichtung zur Messung des Eingangsstroms jedes Aufwärtswandlers zur Erfassung von Messwerten mit einer Abtastfrequenz, welche einem Vielfachen der Netzfrequenz der Wechselspannung entspricht, und daraus zur Berechnung des Spannungshubs und allenfalls des minimalen Tastverhältnisses ausgebildet.

Die DC-Quelle kann beispielsweise durch ein Photovoltaik-Modul, einen Windgenerator und bzw. oder eine Batterie gebildet sein. Es können auch verschiedene DC-Quellen an einem Aufwärtswandler oder an jeweils eigenen Aufwärtswandlern angeschlossen sein.

Wenn jeder Aufwärtswandler bidirektional ausgeführt ist, kann dieser auch in umgekehrter Richtung zur Abwärtswandlung der DC-Spannung am Zwischenkreis in eine kleinere Spannung am DC-Eingang eingesetzt werden. Wie bereits oben erwähnt, kann hier der Wechselrichter auch in umgekehrter Richtung verwendet werden, um beispielsweise am Eingang befindliche Batterien vom Versorgungsnetz laden zu können, wobei auch hier eine dynamische Berechnung des umgekehrten Spannungshubs bei den Abwärtswandlern stattfindet.

Die Erfindung wird anhand der beigefügten Figuren näher erläutert. Darin zeigen:

Fig. 1 ein Blockschaltbild eines Wechselrichters mit mehreren als Aufwärtswandler ausgebildeten DC/DC-Wandlern;

Fig. 2 ein vereinfachtes Schaltbild eines Aufwärtswandlers als DC/DC-Wandler eines Wechselrichters;

Fig. 3    den resultierenden Spannungshub v eines Aufwärtswandlers nach dem erfindungsgemäßen Verfahren, wobei der Zwischenkreisspannung $U_{ZK}$ ein Spannungsrippel $\Delta U_{ZK}$ überlagert ist;

Fig. 4    den resultierenden Spannungshub v eines Aufwärtswandlers nach dem Stand der Technik bei drei verschiedenen Größen des Spannungsrippels $\Delta U_{ZK}$ der Zwischenkreisspannung $U_{ZK}$;

Fig. 5    den resultierenden Spannungshub v eines Aufwärtswandlers nach dem erfindungsgemäßen Verfahren bei drei verschiedenen Größen des Spannungsrippels $\Delta U_{ZK}$ der Zwischenkreisspannung $U_{ZK}$;

Fig. 6    schematisch das minimale Tastverhältnis $D_{min}$ eines Aufwärtswandlers in Abhängigkeit des Eingangsstromes $I_{DC}$ beim Stand der Technik; und

Fig. 7    schematisch das minimale Tastverhältnis $D_{min}$ eines Aufwärtswandlers in Abhängigkeit des Eingangsstromes $I_{DC}$ beim erfindungsgemäßen Verfahren.

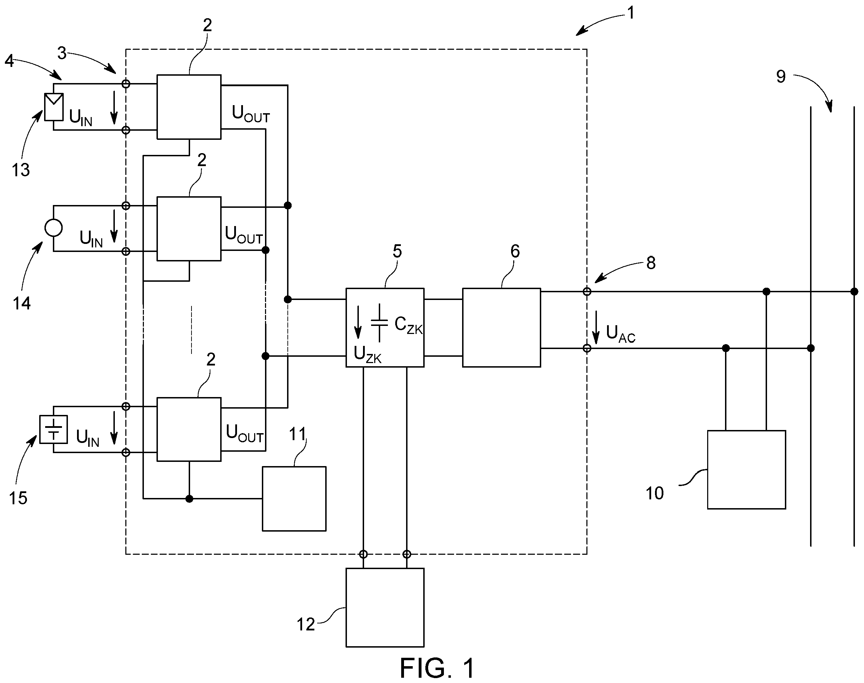

Fig. 1 zeigt ein Blockschaltbild eines Wechselrichters 1 mit mehreren als Aufwärtswandler 2 ausgebildeten DC/DC-Wandlern. Der Wechselrichter 1 beinhaltet zumindest einen DC-Eingang 3 zur Verbindung mit zumindest einer DC-Quelle 4. An jedem DC-Eingang 3 ist ein DC/DC-Wandler angeordnet, der als Booster oder Aufwärtswandler 2 bzw. Hochsetzsteller ausgebildet ist. Der Aufwärtswandler 2 wandelt die am DC-Eingang 3 anliegende Eingangsspannung $U_{IN}$ der jeweiligen DC-Quelle 4 in eine um einen Spannungshub $v=U_{OUT}/U_{IN}$ höhere Ausgangsspannung $U_{OUT}$ um. Ein Zwischenkreis 5 mit einem Zwischenkreiskondensator $C_{ZK}$ wird von den Ausgangsspannungen $U_{OUT}$ aller Aufwärtswandler 2 gespeist. Nach dem Zwischenkreis 5 folgt ein DC/AC-Wandler 6 zur Umwandlung der Zwischenkreisspannung $U_{ZK}$ in eine gewünschte Wechselspannung $U_{AC}$. Der AC-Ausgang 8 ist mit einem Versorgungsnetz 9 und bzw. oder Verbrauchern 10 verbunden. Über eine Steuereinrichtung 11 werden die verschiedenen Komponenten des Wechselrichters 1 gesteuert bzw. geregelt.

Beim Wechselrichter 1 handelt es sich beispielsweise um einen Photovoltaik-Wechselrichter einer Photovoltaik-Anlage zur Umwandlung der von Photovoltaik-Modulen 13 als DC-Quellen 4 erzeugten Gleichspannung $U_{DC}$ in eine entsprechende Wechselspannung $U_{AC}$, welche in ein Versorgungsnetz 9 eingespeist oder zur Versorgung von Verbrauchern 10 mit elektrischer Energie verwendet wird. Als DC-Quelle 4 kommen beispielsweise auch Windgeneratoren 14, Batterien 15 oder andere Quellen in Frage.

Am Zwischenkreis 5 des Wechselrichters 1 kann auch zumindest ein Energiespeicher 12 angeschlossen sein, welcher zur temporären Speicherung elektrischer Energie verwendet werden kann. Solche Wechselrichter 1 werden als Hybrid-Wechselrichter bezeichnet. Energiespeicher 12 werden üblicherweise über einen Batterietrenner (nicht dargestellt) mit dem Wechselrichter 1 verbunden, und bei Bedarf zugeschaltet.

Üblicherweise arbeiten die Aufwärtswandler 2 mit einem fixen Spannungshub v. Entsprechend der Eingangsspannung $U_{IN}$ und dem jeweiligen Spannungshub v resultiert eine entsprechende Ausgangsspannung $U_{OUT}$, welche innerhalb der vorgegebenen Grenzen der Zwischenkreisspannung $U_{ZK}$, also zwischen der maximalen Zwischenkreisspannung $U_{ZK\_max}$ und der minimalen Zwischenkreisspannung $U_{ZK\_min}$ liegen muss. Durch die Leistungsentnahme am AC-Ausgang 8 des Wechselrichters 1 kommt es zu Schwankungen der Zwischenkreisspannung $U_{ZK}$ in Form eines überlagerten Spannungsrippels $\Delta U_{ZK}$. Dies schränkt den Arbeitsbereich des jeweiligen Aufwärtswandlers 2 bei einem fixen Spannungshub v neben dem zulässigen Bereich für die Zwischenkreisspannung $U_{ZK}$ zwischen der maximalen Zwischenkreisspannung $U_{ZK\_max}$ und der minimalen Zwischenkreisspannung $U_{ZK\_min}$ noch weiter ein. Erfindungsgemäß ist daher vorgesehen, dass der Spannungshub v unter Berücksichtigung der Eingangsspannung $U_{IN}$ des jeweiligen Aufwärtswandlers 2 und der Zwischenkreisspannung $U_{ZK}$ samt Spannungsrippel $\Delta U_{ZK}$ laufend bzw. dynamisch berechnet und entsprechend angepasst wird. Somit kann der Spannungshub v jeweils möglichst gering gehalten werden (minimaler Spannungshub) und somit ein entsprechend geringer bzw. minimierter Wert des Sollwerts der Zwischenkreisspannung $U_{ZK\_soll}$ erzielt werden. Dadurch resultiert eine bessere Ausnützung des Aufwärtswandlers 2, es kann also der Aufwärtswandler 2 in einem größeren Arbeitsbereich betrieben werden. In der Folge kann der Wirkungsgrad des Wechselrichters 1 entsprechend optimiert werden.

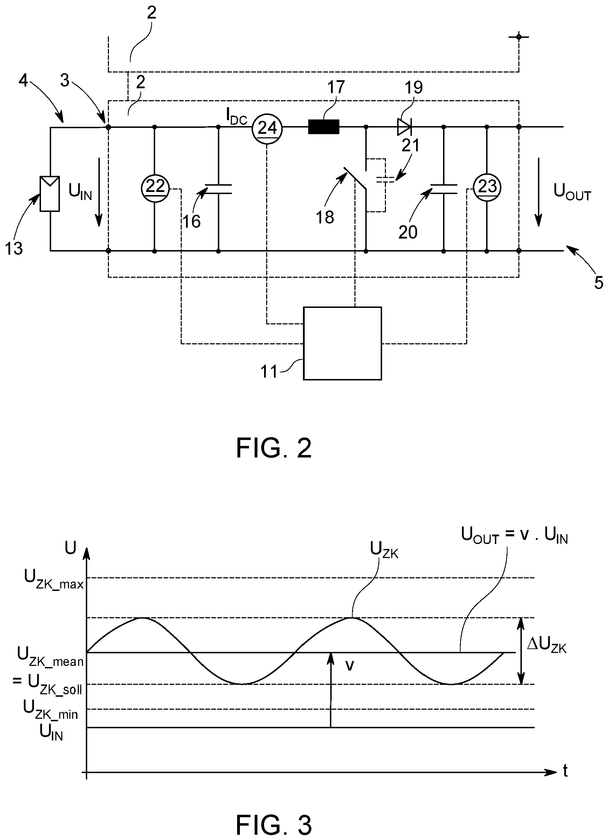

Fig. 2 zeigt ein vereinfachtes Schaltbild eines Aufwärtswandlers 2 als DC/DC-Wandler eines Wechselrichters 1. Der Aufwärtswandler 2 weist zumindest eine Drossel 17, einen Schalter 18, eine Diode 19 und einen Ausgangskondensator 20 auf. Der Schalter 18 ist durch einen Halbleiterschalter gebildet und weist eine gewisse parasitäre Kapazität 21 auf. Weiters ist im Ersatzschaltbild des Aufwärtswandlers 2 ein Eingangskondensator 16 dargestellt. Über die Steuereinrichtung 11 wird der Schalter 18 mit einer bestimmten Schaltfrequenz $f_s$ und einem bestimmten Tastverhältnis D ein- und ausgeschaltet, sodass eine gewünschte Ausgangsspannung $U_{OUT}$ resultiert. Die Ausgangsspannung $U_{OUT}$ ist um den Spannungshub v größer als die Eingangsspannung $U_{IN}$. Die Ausgangsspannung $U_{OUT}$, welche dem Sollwert der Zwischenkreisspannung $U_{ZK\_soll}$ entspricht, muss sich innerhalb bestimmter Grenzen zwischen einer maximalen Zwischenkreisspannung $U_{ZK\_max}$ und einer minimalen Zwischenkreisspannung $U_{ZK\_min}$ befinden. Wird eine der beiden Grenzen erreicht, wird der jeweilige Aufwärtswandler 2 deaktiviert und die am DC-Eingang 3 des deaktivierten Aufwärtswandlers 2 angeschlossene DC-Quelle 4, beispielsweise ein Photovoltaik-Modul, kann dann unter Umständen keinen Beitrag zur Einspeisung von Energie in das Versorgungsnetz 9 oder zur Versorgung der Verbraucher 10 mit elektrischer Energie beitragen. Üblicherweise sind mehrere Aufwärtswandler 2 parallel geschaltet und am selben Zwischenkreis 5 angeschlossen. Es kann aber auch nur ein Aufwärtswandler 2 zur Umwandlung der Eingangsspannung $U_{IN}$ einer DC-Quelle 4 vorgesehen sein.

Erfindungsgemäß ist eine Spannungsmesseinrichtung 22 zur Messung der Eingangsspannung $U_{IN}$ jedes Aufwärtswandlers 2 und eine Spannungsmesseinrichtung 23 zur Messung der Zwischenkreisspannung $U_{ZK}$ samt Spannungsrippel $\Delta U_{ZK}$ vorgesehen und mit der Steuereinrichtung 11 verbunden. In der Steuereinrichtung 11 erfolgt eine Verarbeitung der Messwerte und eine dynamische Berechnung eines minimalen Spannungshubs v für jeden Aufwärtswandlers 2 in Abhängigkeit der gemessenen Eingangsspannung $U_{IN}$ und des gemessenen Spannungsrippels $\Delta U_{ZK}$ zur Minimierung des Sollwerts der Zwischenkreisspannung $U_{ZK\_soll}$. Dadurch kann eine optimale Ausnützung des Arbeitsbereichs des jeweiligen Aufwärtswandlers 2 auch bei schwankenden Eingangsspannungen $U_{IN}$ erzielt werden. Vorteilhafterweise erfolgt die Berechnung des minimalen Spannungshubs v jedes Aufwärtswandlers 2 nach der Gleichung $v = 1/(1-D_{min}) + \Delta U_{ZK}/2.U_{IN}$, worin v den Spannungshub, $D_{min}$ das minimale Tastverhältnis des Aufwärtswandlers 2, $\Delta U_{ZK}$ den Spannungsrippel und $U_{IN}$ die Eingangsspannung des Aufwärtswandlers 2 bezeichnen.

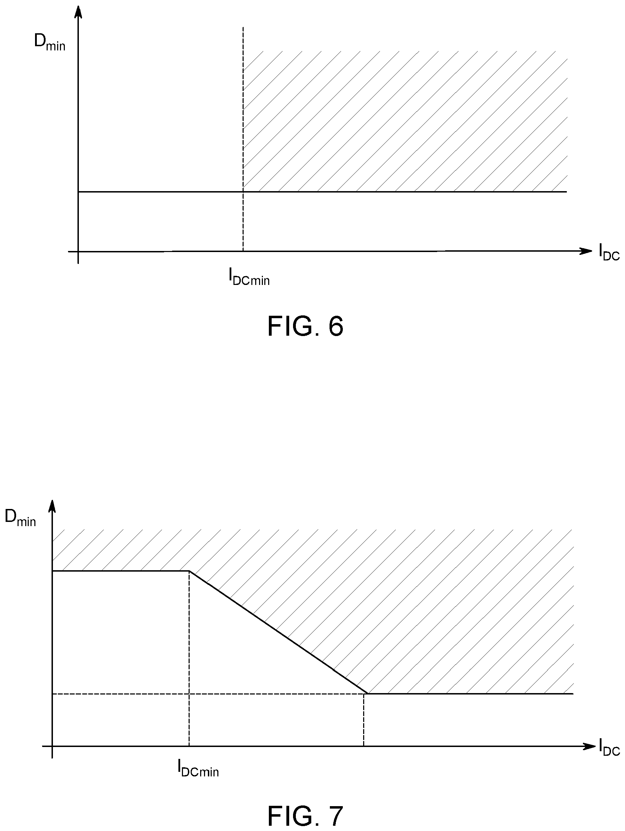

Zusätzlich kann eine Strommesseinrichtung 24 zur Messung des Eingangsstroms $I_{DC}$ des Aufwärtswandlers 2 vorgesehen sein und die Steuereinrichtung 11 zur Änderung des minimalen Tastverhältnisses $D_{min}$ des Schalters 18 jedes Aufwärtswandlers 2 in Abhängigkeit des gemessenen Eingangsstromes $I_{DC}$ ausgebildet sein. Dadurch kann bei kleineren Eingangsströmen $I_{DC}$ die untere Grenze für das Tastverhältnis des Schalters 18 etwas erhöht werden, und auch in diesem Fall ein Betrieb des Aufwärtswandlers 2 mit etwas höherem Spannungshub v gewährleistet werden. (siehe Beschreibung der Figuren 6 und 7). Fig. 3 zeigt den resultierenden Spannungshub v eines Aufwärtswandlers 2 nach dem erfindungsgemäßen Verfahren, wobei der Zwischenkreisspannung $U_{ZK}$ ein Spannungsrippel $\Delta U_{ZK}$ überlagert ist. Die Figur zeigt den zeitlichen Verlauf der im Wesentlichen konstanten Eingangsspannung $U_{IN}$ und der Zwischenkreisspannung $U_{ZK}$ mit dem überlagertem Spannungsrippel $\Delta U_{ZK}$, wobei die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ strichliert eingezeichnet sind. Der minimale Spannungshub v wird bei der gemessenen Eingangsspannung $U_{IN}$ des Aufwärtswandlers 2 und dem gemessenen Spannungsrippel $\Delta U_{ZK}$ so berechnet, dass aus der Eingangsspannung $U_{IN}$ multipliziert mit dem Spannungshub v der Mittelwert $U_{ZK\_mean}$ der Zwischenkreisspannung $U_{ZK}$ resultiert, welcher auch dem Regelsollwert $U_{ZK\_soll}$ der Zwischenkreisspannung $U_{ZK}$ entspricht. Dem Mittelwert $U_{ZK\ mean}$ der Zwischenkreisspannung $U_{ZK}$ ist der Spannungsrippel $\Delta U_{ZK}$ überlagert. Die Ausgangsspannung $U_{OUT}$ des Aufwärtswandlers 2 und der Mittelwert $U_{ZK\_mean}$ der Zwischenkreisspannung $U_{ZK}$ entsprechen dem selben Wert.

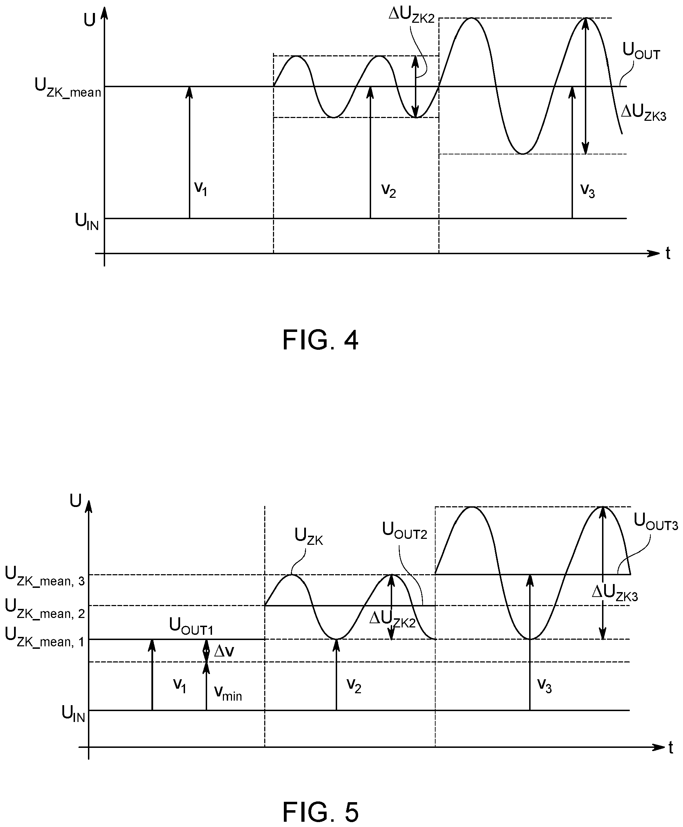

Fig. 4 zeigt den resultierenden Spannungshub v eines Aufwärtswandlers nach dem Stand der Technik bei drei verschiedenen Größen des Spannungsrippels $\Delta U_{ZK}$ der Zwischenkreisspannung $U_{ZK}$. Die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ (siehe Fig. 3) sind hier der besseren Übersicht halber nicht eingezeichnet. Im linken Teil des zeitlichen Verlaufs der Spannungen ist der Fall eingezeichnet, bei dem der Zwischenkreisspannung $U_{ZK}$ kein Spannungsrippel $\Delta U_{ZK}$ überlagert ist. Dies ist beispielsweise dann der Fall, wenn ein Energiespeicher 12 des Wechselrichters 1 von den Photovoltaik-Modulen 13 als DC-Quelle 4 geladen wird. Im mittleren Teil der Abbildung ist der Zwischenkreisspannung $U_{ZK}$ ein kleiner Spannungsrippel $\Delta U_{ZK}$ überlagert. Dies ist beispielsweise bei einem geringeren Stromfluss vom Wechselrichter 1 in das Versorgungsnetz 9 bzw. die Verbraucher 10, also einer geringeren Leistungsaufnahme der Fall. Im rechten Teil der Abbildung ist der Zwischenkreisspannung $U_{ZK}$ ein großer Spannungsrippel $\Delta U_{ZK}$ überlagert. Dieser Fall tritt beispielsweise bei einem höheren Stromfluss vom Wechselrichter 1 in das Versorgungsnetz 9 bzw. die Verbraucher 10, also bei einer größeren Leistungsaufnahme, ein. Nach dem Stand der Technik würde der Spannungshub v des jeweiligen Aufwärtswandlers 2 so gewählt, dass der Sollwert $U_{ZK\_soll}$ der Zwischenkreisspannung für alle drei Fälle, also für alle drei Größen des Spannungsrippels $\Delta U_{ZK}$ so groß ist, dass er innerhalb des zulässigen Bereichs der Zwischenkreisspannung $U_{ZK}$, also zwischen der minimalen Zwischenkreisspannung $U_{ZK\_min}$ und der maximalen Zwischenkreisspannung $U_{ZK\_max}$ liegt. Der Spannungshub v nach dem Stand der Technik würde auf einen worst case Betriebsfall ausgelegt werden und für den Spannungshub $v_1$, $v_2$ und $v_3$ in allen drei Fällen übernommen werden und somit gleich groß sein.

Fig. 5 zeigt den resultierenden Spannungshub v eines Aufwärtswandlers nach dem erfindungsgemäßen Verfahren bei den drei verschiedenen Größen des Spannungsrippels $\Delta U_{ZK}$ der Zwischenkreisspannung $U_{ZK}$ entsprechend Fig. 4. Auch hier sind die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ (siehe Fig. 3) der besseren Übersicht halber nicht eingezeichnet. Hier kann durch die Berücksichtigung des Spannungsrippels $\Delta U_{ZK}$ eine optimale Berechnung eines minimalen Spannungshubs v stattfinden. Im linken Teil der Figur, dem Fall, bei dem der Zwischenkreisspannung $U_{ZK}$ kein Spannungsrippel $\Delta U_{ZK}$ überlagert ist, würde das Ergebnis zu einem minimalen Spannungshub v führen, der allenfalls um einen bestimmten Spannungshub Δv zur Berücksichtigung einer Reglerreserve erhöht werden könnte. Dennoch liegt der minimale Spannungshub $v_1$ in diesem Fall deutlich unter jenem nach dem Stand der Technik (siehe Fig. 4, linker Teil der Abbildung). Auch beim mittleren Teil des Spannungsverlaufs, bei dem der Zwischenkreisspannung $U_{ZK}$ ein kleiner Spannungsrippel $\Delta U_{ZK}$ überlagert ist, resultiert beim erfindungsgemäßen Verfahren durch die Berücksichtigung des Spannungsrippels $\Delta U_{ZK}$ ein geringerer Wert für den Spannungshub $v_2$ als beim Stand der Technik (siehe Fig. 4, mittlerer Teil der Abbildung). Erst beim rechten Teil des Spannungsverlaufs, wobei der Zwischenkreisspannung $U_{ZK}$ ein großer Spannungsrippel $\Delta U_{ZK}$ überlagert ist, resultiert beim erfindungsgemäßen Verfahren ein Spannungshub $v_3$, der jenem des Standes der Technik (siehe Fig. 4, rechter Teil der Abbildung) entspricht.

Der Vergleich der Figuren 4 und 5 zeigt deutlich den Einfluss der Berücksichtigung des Spannungsrippels $\Delta U_{ZK}$ auf die Ermittlung des minimalen Spannungshubs v des Aufwärtswandlers 2. Während beim Stand der Technik gemäß Fig. 4 bei allen drei Fällen verschiedener Spannungsrippel $\Delta U_{ZK}$ ein gleich großer Spannungshub v und somit eine gleich große Ausgangsspannung $U_{OUT}$ des Aufwärtswandlers 2 resultiert, kann beim erfindungsgemäßen Verfahren bei geringerem Spannungsrippel $\Delta U_{ZK}$ der Spannungshub v reduziert werden, wodurch auch die jeweilige Ausgangsspannung $U_{OUT}$ des Aufwärtswandlers als Sollwert $U_{ZK\_soll}$ der Zwischenkreisspannung $U_{ZK}$ verringert werden kann.

In Fig. 6 ist schematisch das minimale Tastverhältnis $D_{min}$ in Abhängigkeit des Eingangsstromes $I_{DC}$ eines Aufwärtswandlers 2 dargestellt. Beim Stand der Technik wird unabhängig vom Eingangsstrom $I_{DC}$ ein minimales Tastverhältnis $D_{min}$ des Schalters 18 des Aufwärtswandlers 2 festgelegt und der Bereich (schraffierter Bereich) oberhalb dieser Grenze für die Regelung des Aufwärtswandlers 2 verwendet. Das minimale Tastverhältnis $D_{min}$ hängt von der parasitären Kapazität 21 des Schalters 18 ab. Ab einem gewissen minimalen Eingangsstrom $I_{DC\_min}$ kann mit dem minimalen Tastverhältnis $D_{min}$ keine Regelung des Aufwärtswandlers 2 mehr stattfinden, weshalb unterhalb dieses minimalen Eingangsstroms $I_{DC\_min}$ kein Betrieb des Aufwärtswandlers 2 möglich ist.

In Fig. 7 ist schematisch das minimale Tastverhältnis $D_{min}$ in Abhängigkeit des Eingangsstromes $I_{DC}$ eines Aufwärtswandlers 2 beim erfindungsgemäßen Verfahren dargestellt. Je nach Größe des Eingangsstroms $I_{DC}$ des Aufwärtswandlers 2 wird die minimale Schaltzeit des Schalters 18 aufgrund seiner parasitären Kapazität 21 verändert. Bei einem kleineren Eingangsstrom $I_{DC}$ muss das minimale Tastverhältnis $D_{min}$ des Aufwärtswandlers 2 angehoben werden, wohingegen bei höherem Eingangsstrom $I_{DC}$ eine Absenkung des minimalen Tastverhältnisses $D_{min}$ stattfinden muss. Dadurch kann in bestimmten Fällen, beispielsweise in den Morgenstunden bei einem Photovoltaik-Modul als DC-Quelle 4 mit einem geringeren Eingangsstrom $I_{DC}$ eine optimale Anpassung des Spannungshubs v des Aufwärtswandlers 2 durch Anpassung des minimalen Tastverhältnisses $D_{min}$ erfolgen und bei geringeren Eingangsströmen $I_{DC}$ mit einem erhöhten minimalen Tastverhältnis $D_{min}$ ein Betrieb und eine Regelung des Aufwärtswandlers 2 stattfinden. Dementsprechend kann der Betriebsbereich (schraffierter Bereich) des Aufwärtswandlers 2 vergrößert werden.

Der Schutzbereich der Erfindung wird durch die nachfolgenden Patentansprüche festgelegt.

**Patentansprüche**

1. Verfahren zum Betreiben eines Wechselrichters (1) zur Umwandlung einer Gleichspannung ($U_{DC}$) in eine Wechselspannung ($U_{AC}$), wobei mit zumindest einem durch einen Aufwärtswandler (2) gebildeten DC/DC-Wandler eine am DC-Eingang (3) des Aufwärtswandlers (2) anliegende Eingangsspannung ($U_{IN}$) einer DC-Quelle (4) in eine um einen Spannungshub (v) höhere Ausgangsspannung ($U_{OUT}$) umgewandelt wird, mit den Ausgangsspannungen ($U_{OUT}$) aller Aufwärtswandler (2) ein Zwischenkreis (5) mit einem Zwischenkreiskondensator ($C_{ZK}$) mit einer einen Mittelwert ($U_{ZK\_mean}$) aufweisenden Zwischenkreisspannung ($U_{ZK}$) gespeist wird, die Zwischenkreisspannung ($U_{ZK}$) über einen DC/AC-Wandler (6) in die Wechselspannung ($U_{AC}$) umgewandelt und an einen mit einem Versorgungsnetz (9) und bzw. oder Verbrauchern (10) verbundenen AC-Ausgang (8) angelegt wird, wodurch der Zwischenkreisspannung ($U_{ZK}$) am Zwischenkreiskondensator ($C_{ZK}$) ein Spannungsrippel ($\Delta U_{ZK}$) überlagert wird, wobei in jedem Aufwärtswandler (2) mit zumindest einer Drossel (17), einem Schalter (18), einer Diode (19) und einem Ausgangskondensator (20) der Schalter (18) über eine Steuereinrichtung (11) mit einer bestimmten Schaltfrequenz ($f_s$) und einem bestimmten Tastverhältnis (D) ein- und ausgeschaltet wird, sodass die Ausgangsspannung ($U_{OUT}$) jedes Aufwärtswandlers (2) einem zwischen einer maximalen Zwischenkreisspannung ($U_{ZK\_max}$) und einer minimalen Zwischenkreisspannung ($U_{ZK\_min}$) liegenden Sollwert der Zwischenkreisspannung ($U_{ZK\_soll}$) entspricht, und wobei die Eingangsspannung ($U_{IN}$) jedes Aufwärtswandlers (2) und die Zwischenkreisspannung ($U_{ZK}$) samt Spannungsrippel ($\Delta U_{ZK}$) gemessen wird, **dadurch gekennzeichnet, dass** der Spannungshub (v) jedes Aufwärtswandlers (2) in Abhängigkeit der gemessenen Eingangsspannung ($U_{IN}$) des jeweiligen Aufwärtswandlers (2) und des gemessenen Spannungsrippels ($\Delta U_{ZK}$) der Zwischenkreisspannung ($U_{ZK}$) dynamisch berechnet und minimiert wird, und der Schalter (18) jedes Aufwärtswandlers (2) mit der bestimmten Schaltfrequenz ($f_s$) und dem bestimmten Tastverhältnis (D) ein- und ausgeschaltet wird, sodass die Eingangsspannung (U$_{IN}$) entsprechend dem berechneten Spannungshub (v) in eine entsprechende Ausgangsspannung (U$_{OUT}$) umgewandelt wird, die dem Sollwert der Zwischenkreisspannung (U$_{ZK\_soll}$) entspricht, und somit der Sollwert der Zwischenkreisspannung (U$_{ZK\_soll}$) minimiert wird, wobei bei geringerem Spannungsrippel (ΔU$_{ZK}$) der Spannungshub (v) reduziert wird, und wobei ein minimaler Spannungshub (v) bei der gemessenen Eingangsspannung (U$_{IN}$) des Aufwärtswandlers (2) und dem gemessenen Spannungsrippel (ΔU$_{ZK}$) so berechnet wird, dass aus der Eingangsspannung (U$_{IN}$) multipliziert mit dem Spannungshub (v) der Mittelwert (U$_{ZK\_mean}$) der Zwischenkreisspannung (U$_{ZK}$) resultiert, welcher auch dem Sollwert (U$_{ZKsoll}$) der Zwischenkreisspannung (U$_{ZK}$) entspricht.

2. Verfahren nach Anspruch 1, **dadurch gekennzeichnet, dass** der Schalter (18) jedes Aufwärtswandlers (2) über die Steuereinrichtung (11) unter Berücksichtigung eines vorgegebenen minimalen Tastverhältnisses (D$_{min}$) mit der bestimmten Schaltfrequenz (f$_s$) und dem bestimmten Tastverhältnis (D) ein- und ausgeschaltet wird.

3. Verfahren nach Anspruch 2, **dadurch gekennzeichnet, dass** der Spannungshub (v) jedes Aufwärtswandlers (2) nach der Gleichung

$$v = 1/(1-D_{min}) + \Delta U_{ZK}/2.U_{IN}$$

dynamisch berechnet wird.

4. Verfahren nach einem der Ansprüche 1 bis 3, **dadurch gekennzeichnet, dass** der berechnete Spannungshub (v) jedes Aufwärtswandlers (2) um einen definierten Wert (Δv) erhöht wird.

5. Verfahren nach Anspruch 2 bis 4, **dadurch gekennzeichnet, dass** der Eingangsstrom (I$_{DC}$) jedes Aufwärtswandlers (2) gemessen wird, und das minimale Tastverhältnis (D$_{min}$) des Schalters (12) jedes Aufwärtswandlers (2) in Abhängigkeit des gemessenen Eingangsstromes (I$_{DC}$) geändert wird.

6. Verfahren nach einem der Ansprüche 1 bis 5, **dadurch gekennzeichnet, dass** die Eingangsspannung (U$_{IN}$) jedes Aufwärtswandlers (2) und die Zwischenkreisspannung (U$_{ZK}$) samt Spannungsrippel (ΔU$_{ZK}$) und allenfalls der Strom (I$_{DC}$) durch die Drossel (17) mit einer Abtastfrequenz (f$_A$), welche einem Vielfachen der Netzfrequenz (f$_N$) der Wechselspannung (U$_{AC}$) entspricht, gemessen und daraus der Spannungshub (v) und allenfalls das minimale Tastverhältnis (D$_{min}$) berechnet wird.

7. Verfahren nach einem der Ansprüche 1 bis 6, **dadurch gekennzeichnet, dass** jeder Aufwärtswandler (2) bidirektional ausgeführt und als Abwärtswandler zur Umwandlung der Ausgangsspannung (U$_{OUT}$) in eine kleinere Eingangsspannung (U$_{IN}$) verwendet wird.

8. Wechselrichter (1) zur Umwandlung einer Gleichspannung (U$_{DC}$) in eine Wechselspannung (U$_{AC}$), mit zumindest einem durch einen Aufwärtswandler (2) gebildeten DC/DC-Wandler zur Umwandlung einer am DC-Eingang (3) des Aufwärtswandlers (2) anliegenden Eingangsspannung (U$_{IN}$) einer DC-Quelle (4) in eine höhere Ausgangsspannung (U$_{OUT}$) mit einem Spannungshub (v), einem mit den Ausgangsspannungen (U$_{OUT}$) aller Aufwärtswandler (2) gespeisten Zwischenkreis (5) mit einem Zwischenkreiskondensator (C$_{ZK}$), einem DC/AC-Wandler (6) und einem AC-Ausgang (8) zur Verbindung mit einem Versorgungsnetz (9) und bzw. oder Verbrauchern (10), wodurch der einen Mittelwert (U$_{ZK\_mean}$) aufweisenden Zwischenkreisspannung (U$_{ZK}$) am Zwischenkreiskondensator (C$_{ZK}$) ein Spannungsrippel (ΔU$_{ZK}$) überlagert wird, wobei jeder Aufwärtswandler (2) eine Drossel (17), einen Schalter (18), eine Diode (19) und einen Ausgangskondensator (20) aufweist, und mit einer Steuereinrichtung (11), die zum Ein- und Ausschalten des Schalters (18) jedes Aufwärtswandlers (2) mit einer bestimmten Schaltfrequenz (f$_s$) und einem bestimmten Tastverhältnis (D) ausgebildet ist, sodass die Ausgangsspannung (U$_{OUT}$) jedes Aufwärtswandlers (2) einem zwischen einer maximalen Zwischenkreisspannung (U$_{ZK\_max}$) und einer minimalen Zwischenkreisspannung (U$_{ZK\_min}$) liegenden Sollwert der Zwischenkreisspannung (U$_{ZK\_soll}$) entspricht, wobei eine Spannungsmesseinrichtung (22) zur Messung der Eingangsspannung (U$_{IN}$) jedes Aufwärtswandlers (2) und eine Spannungsmesseinrichtung (23) zur Messung der Zwischenkreisspannung (U$_{ZK}$) samt Spannungsrippel (ΔU$_{ZK}$) vorgesehen ist, **dadurch gekennzeichnet, dass** die Steuereinrichtung (11) zur dynamischen Berechnung und Minimierung des Spannungshubs (v) jedes Aufwärtswandlers (2) in Abhängigkeit der gemessenen Eingangsspannung (U$_{IN}$) des jeweiligen Aufwärtswandlers (2) und des gemessenen Spannungsrippels (ΔU$_{ZK}$) der Zwischenkreisspannung (U$_{ZK}$) ausgebildet ist, und die Steuereinrichtung (11) weiterhin zum Ein- und Ausschalten des Schalters (18) jedes Aufwärtswandlers (2) mit der bestimmten Schaltfrequenz (f$_s$) und dem bestimmten Tastverhältnis (D), sodass die Eingangsspannung (U$_{IN}$) entsprechend dem berechneten Spannungshub (v) in eine entsprechende Ausgangsspannung (U$_{OUT}$) umgewandelt wird, die dem Sollwert der Zwischenkreisspannung (U$_{ZK\_soll}$) entspricht, und somit zur Minimierung des Sollwerts der Zwischenkreisspannung (U$_{ZK\_soll}$) ausgebildet ist, wobei die Steuereinrichtung (11) ferner dazu ausgebildet ist, bei geringerem Spannungsrippel ($\Delta U_{ZK}$) den Spannungshub (v) zu reduzieren, und einen minimalen Spannungshub (v) bei der gemessenen Eingangsspannung ($U_{IN}$) des Aufwärtswandlers (2) und dem gemessenen Spannungsrippel ($\Delta U_{ZK}$) so zu berechnen, dass aus der Eingangsspannung ($U_{IN}$) multipliziert mit dem Spannungshub (v) der Mittelwert ($U_{ZK\_mean}$) der Zwischenkreisspannung ($U_{ZK}$) resultiert, welcher auch dem Sollwert ($U_{ZKsoll}$) der Zwischenkreisspannung ($U_{ZK}$) entspricht.

9.  Wechselrichter (1) nach Anspruch 8, **dadurch gekennzeichnet, dass** die Steuereinrichtung (11) zum Ein- und Ausschalten des Schalters (18) jedes Aufwärtswandlers (2) mit der bestimmten Schaltfrequenz ($f_s$) und dem bestimmten Tastverhältnis (D) unter Berücksichtigung eines vorgegebenen minimalen Tastverhältnisses ($D_{min}$) ausgebildet ist.

10. Wechselrichter (1) nach Anspruch 9, **dadurch gekennzeichnet, dass** die Steuereinrichtung (11) zur dynamischen Berechnung des Spannungshubs (v) jedes Aufwärtswandlers (2) nach der Gleichung

$$v = 1/(1-D_{min}) + \Delta U_{ZK}/2.U_{IN}$$

ausgebildet ist.

11. Wechselrichter (1) nach einem der Ansprüche 8 bis 10, **dadurch gekennzeichnet, dass** die Steuereinrichtung (11) zur Erhöhung des berechneten Spannungshubs (v) jedes Aufwärtswandlers (2) um einen definierten Wert ($\Delta v$) ausgebildet ist.

12. Wechselrichter (1) nach einem der Ansprüche 9 bis 11, **dadurch gekennzeichnet, dass** eine Strommesseinrichtung (24) zur Messung des Eingangsstroms ($I_{DC}$) jedes Aufwärtswandlers (2) vorgesehen ist, und dass die Steuereinrichtung (11) zur Änderung des minimalen Tastverhältnisses ($D_{min}$) des Schalters (18) jedes Aufwärtswandlers (2) in Abhängigkeit des gemessenen Eingangsstromes ($I_{DC}$) ausgebildet ist.

13. Wechselrichter (1) nach einem der Ansprüche 8 bis 12, **dadurch gekennzeichnet, dass** die Spannungsmesseinrichtung (22) zur Messung der Eingangsspannung ($U_{IN}$) jedes Aufwärtswandlers (2), die Spannungsmesseinrichtung (23) zur Messung der Zwischenkreisspannung ($U_{ZK}$) samt Spannungsrippel ($\Delta U_{ZK}$) und allenfalls die Strommesseinrichtung (24) zur Messung des Eingangsstroms ($I_{DC}$) jedes Aufwärtswandlers (2) zur Erfassung von Messwerten mit einer Abtastfrequenz ($f_A$), welche einem Vielfachen der Netzfrequenz ($f_N$) der Wechselspannung ($U_{AC}$) entspricht, und daraus zur Berechnung des Spannungshubs (v) und allenfalls des minimalen Tastverhältnisses ($D_{min}$) ausgebildet ist.

14. Wechselrichter (1) nach einem der Ansprüche 8 bis 13, **dadurch gekennzeichnet, dass** die DC-Quelle (4) durch ein Photovoltaik-Modul (13), einen Windgenerator (14) und bzw. oder eine Batterie (15) gebildet ist.

15. Wechselrichter (1) nach einem der Ansprüche 8 bis 14, **dadurch gekennzeichnet, dass** jeder Aufwärtswandler (2) bidirektional ausgeführt ist.


**Claims**

1.  A method for operating an inverter (1) for converting a DC voltage ($U_{DC}$) into an AC voltage ($U_{AC}$), wherein by means of at least one DC/DC converter formed by a step-up converter (2), an input voltage ($U_{IN}$) of a DC source (4) that is applied to a DC output (3) of the step-up converter (2) is converted into an output voltage ($U_{OUT}$) that is higher by a voltage swing (v), with the output voltages ($U_{OUT}$) of all of the step-up converters (2) an intermediate circuit (5) having an intermediate circuit capacitor ($C_{ZK}$) is supplied with an intermediate circuit voltage ($U_{ZK}$) having a mean value ($U_{ZK\_mean}$), the intermediate circuit voltage ($U_{ZK}$) is converted into the AC voltage ($U_{AC}$) via a DC/AC converter (6) and is applied to an AC output (8) connected to a supply network (9) and/or loads (10), as a result of which a voltage ripple ($\Delta U_{ZK}$) is superimposed on the intermediate circuit voltage ($U_{ZK}$) at the intermediate circuit capacitor ($C_{ZK}$), wherein in each step-up converter (2) having at least a choke (17), a switch (18), a diode (19) and an output capacitor (20), the switch (18) is switched on and off via a control device (11) at a determined switching frequency ($f_s$) and a determined duty cycle (D), so that the output voltage ($U_{OUT}$) of each step-up converter (2) corresponds to a target value of the intermediate circuit voltage ($U_{ZK\_soll}$) lying between a maximum intermediate circuit voltage ($U_{ZK\_max}$) and a minimum intermediate circuit voltage ($U_{ZK\_min}$), and wherein the input voltage ($U_{in}$) of each step-up converter (2) and the intermediate circuit voltage ($U_{ZK}$) including the voltage ripple ($\Delta U_{ZK}$) is measured, **characterised in that** the voltage swing (v) of each step-up converter (2) is dynamically calculated and minimised depending on the measured input voltage ($U_{in}$) of the relevant step-up converter (2) and the measured voltage ripple ($\Delta U_{ZK}$) of the intermediate circuit voltage ($U_{ZK}$), and the switch (18) of each step-up converter (2) is switched on and off at the determined switching frequency ($f_s$) and the determined duty cycle (D) such that the input voltage ($U_{in}$) is converted in accordance with the calculated voltage swing (v) into a corresponding output voltage

($U_{OUT}$) which corresponds to the target value of the intermediate circuit voltage ($U_{ZK\_soll}$), and thus the target value of the intermediate circuit voltage ($U_{ZK\_soll}$) is minimised, wherein at a lower voltage ripple ($\Delta U_{ZK}$) the voltage swing (v) is reduced, and wherein a minimum voltage swing (v) at the measured input voltage ($U_{in}$) of the step-up converter (2) and the measured voltage ripple ($\Delta U_{ZK}$) is calculated such that the input voltage ($U_{in}$) multiplied by the voltage swing (v) produces the mean value ($U_{ZK\_mean}$) of the intermediate circuit voltage ($U_{ZK}$), which mean value also corresponds to the target value ($U_{ZK\_soll}$) of the intermediate circuit voltage ($U_{ZK}$).

2. The method according to claim 1, **characterised in that** the switch (18) of each step-up converter (2) is switched on and off via the control device (11), taking into account a predetermined minimum duty cycle (Dmin), at the determined switching frequency ($f_s$) and the determined duty cycle (D).

3. The method according to claim 2, **characterised in that** the voltage swing (v) of each step-up converter (2) is dynamically calculated according to the equation

$$v = 1/(1-D_{min}) + \Delta U_{ZK}/2 \cdot U_{IN}.$$

4. The method according to any of claims 1 to 3, **characterised in that** the calculated voltage swing (v) of each step-up converter (2) is increased by a defined value ($\Delta v$).

5. The method according to claims 2 to 4, **characterised in that** the input current ($I_{DC}$) of each step-up converter (2) is measured, and the minimum duty cycle ($D_{min}$) of the switch (12) of each step-up converter (2) is changed depending on the measured input current ($I_{DC}$).

6. The method according to any of claims 1 to 5, **characterised in that** the input voltage ($U_{IN}$) of each step-up converter (2) and the intermediate circuit voltage ($U_{ZK}$) including the voltage ripple ($\Delta U_{ZK}$) and if applicable the current ($I_{DC}$) through the choke (17) are measured at a sampling frequency ($f_A$) which corresponds to a multiple of the network frequency ($f_N$) of the AC voltage ($U_{AC}$), and the voltage swing (v) and if applicable the minimum duty cycle ($D_{min}$) are calculated therefrom.

7. The method according to any of claims 1 to 6, **characterised in that** each step-up converter (2) is bidirectional and is used as a step-down converter for converting the output voltage ($U_{OUT}$) into a smaller input voltage ($U_{IN}$).

8. An inverter (1) for converting a DC voltage ($U_{DC}$) into an AC voltage ($U_{AC}$), comprising at least one DC/DC converter formed by a step-up converter (2) for converting an input voltage ($U_{in}$) of a DC source (4) applied to the DC input (3) of the step-up converter (2) into a higher output voltage ($U_{OUT}$) having a voltage swing (v), an intermediate circuit (5) which is supplied with the output voltages ($U_{OUT}$) of all of the step-up converters (2) and has an intermediate circuit capacitor ($C_{ZK}$), a DC/AC converter (6) and an AC output (8) for connection to a supply network (9) and/or loads (10), as a result of which a voltage ripple ($\Delta U_{ZK}$) is superimposed on the intermediate circuit voltage ($U_{ZK}$) having a mean value ($U_{ZK\_mean}$) at the intermediate circuit capacitor ($C_{ZK}$), wherein each step-up converter (2) has a choke (17), a switch (18), a diode (19) and an output capacitor (20), and comprising a control device (11) which is designed to switch the switch (18) of each step-up converter (2) on and off at a determined switching frequency ($f_s$) and a determined duty cycle (D), so that the output voltage ($U_{OUT}$) of each step-up converter (2) corresponds to a target value of the intermediate circuit voltage ($U_{ZK\_soll}$) lying between a maximum intermediate circuit voltage ($U_{ZK\_max}$) and a minimum intermediate circuit voltage ($U_{ZK\_min}$), wherein a voltage measuring device (22) for measuring the input voltage ($U_{in}$) of each step-up converter (2) and a voltage measuring device (23) for measuring the intermediate circuit voltage ($U_{ZK}$) including the voltage ripple ($\Delta U_{ZK}$) are provided,
**characterised in that** the control device (11) is designed to dynamically calculate and minimise the voltage swing (v) of each step-up converter (2) depending on the measured input voltage ($U_{in}$) of the relevant step-up converter (2) and the measured voltage ripple ($\Delta U_{ZK}$) of the intermediate circuit voltage ($U_{ZK}$), and the control device (11) is designed to switch the switch (18) of each step-up converter (2) on and off at the determined switching frequency ($f_s$) and the determined duty cycle (D), so that the input voltage ($U_{in}$) is converted in accordance with the calculated voltage swing (v) into a corresponding output voltage ($U_{OUT}$) which corresponds to the target value of the intermediate circuit voltage ($U_{ZK-soll}$), and thus to minimise the target value of the intermediate circuit voltage ($U_{ZK\_soll}$), wherein the control device (11) is also designed to reduce the voltage swing (v) at a lower voltage ripple ($\Delta U_{ZK}$), and to calculate a minimum voltage swing (v) at the measured input voltage ($U_{in}$) of the step-up converter (2) and the measured voltage ripple ($\Delta U_{ZK}$) such that the input voltage ($U_{in}$) multiplied by the voltage swing (v) produces the mean value ($U_{ZK\_mean}$) of the intermediate circuit voltage ($U_{ZK}$), which mean value also corresponds to the target value ($U_{ZK\_soll}$) of the intermediate circuit voltage ($U_{ZK}$).

9. The inverter (1) according to claim 8, **characterised in that** the control device (11) is designed to switch the switch (18) of each step-up converter (2) on and off at the determined switching frequency ($f_s$) and the determined duty cycle (D), taking into account a predetermined minimum duty cycle ($D_{min}$).

10. The inverter (1) according to claim 9, **characterised in that** the control device (11) is designed to dynamically calculate the voltage swing (v) of each step-up converter (2) according to the equation

$$V = 1/(1-D_{min}) + \Delta U_{ZK}/2.U_{IN}.$$

11. The inverter (1) according to any of claims 8 to 10, **characterised in that** the control device (11) is designed to increase the calculated voltage swing (v) of each step-up converter (2) by a defined value ($\Delta v$).

12. The inverter (1) according to any of claims 9 to 11, **characterised in that** a current measuring device (24) for measuring the input current ($I_{DC}$) of each step-up converter (2) is provided, and **in that** the control device (11) is designed to change the minimum duty cycle ($D_{min}$) of the switch (18) of each step-up converter (2) depending on the measured input current ($I_{DC}$).

13. The inverter (1) according to any of claims 8 to 12, **characterised in that** the voltage measuring device (22) is designed to measure the input voltage ($U_{IN}$) of each step-up converter (2), the voltage measuring device (23) is designed to measure the intermediate circuit voltage ($U_{ZK}$) including the voltage ripple ($\Delta U_{ZK}$), and if applicable the current measuring device (24) is designed to measure the input current ($I_{DC}$) of each step-up converter (2) in order to detect measured values at a sampling frequency ($f_A$) which corresponds to a multiple of the network frequency ($f_N$) of the AC voltage ($U_{AC}$), and to calculate the voltage swing (v) and if applicable the minimum duty cycle ($D_{min}$) therefrom.

14. The inverter (1) according to any of claims 8 to 13, **characterised in that** the DC source (4) is formed by a photovoltaic module (13), a wind generator (14) and/or a battery (15).

15. The inverter (1) according to any of claims 8 to 14, **characterised in that** each step-up converter (2) is bidirectional.

**Revendications**

1. Procédé pour faire fonctionner un onduleur (1) pour la conversion d'une tension continue ($U_{DC}$) en une tension alternative ($U_{AC}$), dans lequel une tension d'entrée ($U_{IN}$) d'une source CC (4) appliquée à l'entrée CC (3) du convertisseur élévateur de tension (2) est convertie en une tension de sortie ($U_{OUT}$) plus élevée d'une excursion de tension (v) avec au moins un convertisseur CC/CC formé par un convertisseur élévateur de tension (2), un circuit intermédiaire (5) avec un condensateur de circuit intermédiaire ($C_{ZK}$) avec une tension de circuit intermédiaire ($U_{ZK}$) présentant une moyenne ($U_{ZK-mean}$) est alimenté avec les tensions de sortie ($U_{OUT}$) de tous les convertisseurs élévateurs de tension (2), la tension de circuit intermédiaire ($U_{ZK}$) est convertie en la tension alternative ($U_{AC}$) par l'intermédiaire d'un convertisseur CC/CA (6) et appliquée à une sortie CA (8) reliée à un réseau d'alimentation (9) et/ou à des consommateurs (10), ce qui a pour effet qu'une ondulation de tension ($\Delta U_{ZK}$) est superposée à la tension de circuit intermédiaire ($U_{ZK}$) sur le condensateur de circuit intermédiaire ($C_{ZK}$), dans lequel, dans chaque convertisseur élévateur de tension (2) avec au moins une bobine (17), un commutateur (18), une diode (19) et un condensateur de sortie (20) le commutateur (18) est mis sous tension et hors tension par l'intermédiaire d'un dispositif de commande (11) avec une fréquence de commutation ($f_s$) déterminée et un rapport cyclique (D) déterminé, de sorte que la tension de sortie ($U_{OUT}$) de chaque convertisseur élévateur de tension (2) correspond à une valeur de consigne de la tension de circuit intermédiaire ($U_{ZK\_soll}$) située entre une tension de circuit intermédiaire maximale ($U_{ZK\_max}$) et une tension de circuit intermédiaire minimale ($U_{ZK\_min}$), et dans lequel la tension d'entrée ($U_{IN}$) de chaque convertisseur élévateur de tension (2) et la tension de circuit intermédiaire ($U_{ZK}$) accompagnée de l'ondulation de tension ($\Delta U_{ZK}$) est mesurée, **caractérisé en ce que** l'excursion de tension (v) de chaque convertisseur élévateur de tension (2) est calculée de manière dynamique et réduite au minimum en fonction de la tension d'entrée ($U_{IN}$) mesurée du convertisseur élévateur de tension (2) respectif et de l'ondulation de tension ($\Delta U_{ZK}$) mesurée de la tension de circuit intermédiaire ($U_{ZK}$), et le commutateur (18) de chaque convertisseur élévateur de tension (2) est mis sous tension et hors tension avec la fréquence de commutation ($f_s$) déterminée et le rapport cyclique (D) déterminé, de sorte que la tension d'entrée ($U_{IN}$) est convertie conformément à l'excursion de tension (v) calculée en une tension de sortie ($U_{OUT}$) correspondante, qui correspond à la valeur de consigne de la tension de circuit intermédiaire ($U_{ZK\_soll}$), et ainsi la valeur de consigne de la tension de circuit intermédiaire ($U_{ZK\_soll}$) est réduite au minimum, dans lequel lorsque l'ondulation de tension ($\Delta U_{ZK}$) est faible l'excursion de tension (v) est réduite, et dans lequel une excursion de tension (v) minimale pour la tension d'entrée ($U_{IN}$) mesurée du convertisseur élévateur de tension (2) et l'ondulation de tension ($\Delta U_{ZK}$) mesurée est calculée de sorte que la moyenne ($U_{ZK\text{-}mean}$) de la tension de circuit intermédiaire ($U_{ZK}$), laquelle correspond également à la valeur de consigne ($U_{ZK soll}$) de la tension de circuit intermédiaire ($U_{ZK}$), résulte de la tension d'entrée ($U_{IN}$) multipliée par l'excursion de tension (v).

2. Procédé selon la revendication 1, **caractérisé en ce que** le commutateur (18) de chaque convertisseur élévateur de tension (2) est mis sous tension et hors tension par l'intermédiaire du dispositif de commande (11) avec prise en compte d'un rapport cyclique minimal ($D_{min}$) prédéfini avec la fréquence de commutation ($f_s$) déterminée et le rapport cyclique (D) déterminé.

3. Procédé selon la revendication 2, **caractérisé en ce que** l'excursion de tension (v) de chaque convertisseur élévateur de tension (2) est calculée de manière dynamique selon l'équation

$$v = 1/(1-D_{min}) + \Delta U_{ZK}/2.U_{IN}.$$

4. Procédé selon l'une quelconque des revendications 1 à 3, **caractérisé en ce que** l'excursion de tension (v) calculée de chaque convertisseur élévateur de tension (2) est augmentée d'une valeur ($\Delta v$) définie.

5. Procédé selon la revendication 2 à 4, **caractérisé en ce que** le courant d'entrée ($I_{DC}$) de chaque convertisseur élévateur de tension (2) est mesuré et le rapport cyclique minimal ($D_{min}$) du commutateur (12) de chaque convertisseur élévateur de tension (2) est modifié en fonction du courant d'entrée ($I_{DC}$) mesuré.

6. Procédé selon l'une quelconque des revendications 1 à 5, **caractérisé en ce que** la tension d'entrée ($U_{IN}$) de chaque convertisseur élévateur de tension (2) et la tension de circuit intermédiaire ($U_{ZK}$) accompagnée de l'ondulation de tension ($\Delta U_{ZK}$) et éventuellement le courant ($I_{DC}$) à travers la bobine (17) est mesuré(e) avec une fréquence d'échantillonnage ($f_A$), laquelle correspond à un multiple de la fréquence de réseau ($f_N$) de la tension alternative ($U_{AC}$), et l'excursion de tension (v) et éventuellement le rapport cyclique minimal ($D_{min}$) est calculé(e) à partir de cela.

7. Procédé selon l'une quelconque des revendications 1 à 6, **caractérisé en ce que** chaque convertisseur élévateur de tension (2) est conçu de manière bidirectionnelle et utilisé comme convertisseur élévateur de tension pour la conversion de la tension de sortie ($U_{OUT}$) en une tension d'entrée ($U_{IN}$) plus petite.

8. Onduleur (1) pour la conversion d'une tension continue ($U_{DC}$) en une tension alternative ($U_{AC}$), avec au moins un convertisseur CC/CC formé par un convertisseur élévateur de tension (2) pour la conversion d'une tension d'entrée ($U_{IN}$) d'une source CC (4) appliquée à l'entrée CC (3) du convertisseur élévateur de tension (2) en une tension de sortie ($U_{OUT}$) plus élevée avec une excursion de tension (v), un circuit intermédiaire (5) alimenté avec les tensions de sortie ($U_{OUT}$) de tous les convertisseurs élévateurs de tension (2) avec un condensateur de circuit intermédiaire ($C_{ZK}$), un convertisseur CC/CA (6) et une sortie CA (8) pour la liaison à un réseau d'alimentation (9) et/ou à des consommateurs (10), ce qui a pour effet qu'une ondulation de tension ($\Delta U_{ZK}$) est superposée à la tension de circuit intermédiaire ($U_{ZK}$) présentant une moyenne ($U_{ZK\_mean}$) sur le condensateur de circuit intermédiaire ($C_{ZK}$), dans lequel chaque convertisseur élévateur de tension (2) présente une bobine (17), un commutateur (18), une diode (19) et un condensateur de sortie (20), et avec un dispositif de commande (11), qui est réalisé pour la mise sous tension et hors tension du commutateur (18) de chaque convertisseur élévateur de tension (2) avec une fréquence de commutation ($f_s$) déterminée et un rapport cyclique (D) déterminé, de sorte que la tension de sortie ($U_{OUT}$) de chaque convertisseur élévateur de tension (2) correspond à une valeur de consigne de la tension de circuit intermédiaire ($U_{ZK\_soll}$) située entre une tension de circuit intermédiaire maximale ($U_{ZK\_max}$) et une tension de circuit intermédiaire minimale ($U_{ZK\_min}$), dans lequel un dispositif de mesure de tension (22) pour la mesure de la tension d'entrée ($U_{IN}$) de chaque convertisseur élévateur de tension (2) et un dispositif de mesure de tension (23) pour la mesure de la tension de circuit intermédiaire ($U_{ZK}$) accompagnée de l'ondulation de tension ($\Delta U_{ZK}$) est prévu, **caractérisé en ce que** le dispositif de commande (11) est réalisé pour le calcul dynamique et la réduction au minimum de l'excursion de tension (v) de chaque convertisseur élévateur de tension (2) en fonction de la tension d'entrée ($U_{IN}$) mesurée du convertisseur élévateur de tension (2) respectif et de l'ondulation de tension ($\Delta U_{ZK}$) mesurée de la tension de circuit intermédiaire ($U_{ZK}$), et le dispositif de commande (11) est réalisé en outre pour la mise sous tension et hors tension du commutateur (18) de chaque convertisseur élévateur de tension (2) avec la fréquence de commutation ($f_s$) déterminée et le rapport cyclique (D) déterminé, de sorte que la tension d'entrée ($U_{IN}$) est convertie conformément à l'excursion de tension (v) calculée en une tension de sortie ($U_{OUT}$) correspondante, qui correspond à la valeur de consigne de la tension de circuit intermédiaire ($U_{ZK\_soll}$), et ainsi pour la réduction au minimum de la valeur de consigne de la tension de circuit intermédiaire ($U_{ZK\_soll}$), dans lequel le dispositif de commande (11) est réalisé en outre, lorsque l'ondulation de ten-

sion ($\Delta U_{ZK}$) est faible, pour réduire l'excursion de tension (v), et pour calculer une excursion de tension (v) minimale pour la tension d'entrée ($U_{IN}$) mesurée du convertisseur élévateur de tension (2) et l'ondulation de tension ($\Delta U_{ZK}$) mesurée, de sorte que la moyenne ($U_{ZK\text{-}mean}$) de la tension de circuit intermédiaire ($U_{ZK}$), laquelle correspond également à la valeur de consigne ($U_{ZKsoll}$) de la tension de circuit intermédiaire ($U_{ZK}$), résulte de la tension d'entrée ($U_{IN}$) multipliée par l'excursion de tension (v).

**9.** Onduleur (1) selon la revendication 8, **caractérisé en ce que** le dispositif de commande (11) est réalisé pour la mise sous tension et hors tension du commutateur (18) de chaque convertisseur élévateur de tension (2) avec la fréquence de commutation ($f_s$) déterminée et le rapport cyclique (D) déterminé avec prise en compte d'un rapport cyclique minimal ($D_{min}$) prédéfini.

**10.** Onduleur (1) selon la revendication 9, **caractérisé en ce que** le dispositif de commande (11) est réalisé pour le calcul dynamique de l'excursion de tension (v) de chaque convertisseur élévateur de tension (2) selon l'équation

$$v = 1/(1-D_{min}) + \Delta U_{ZK}/2.U_{IN}.$$

**11.** Onduleur (1) selon l'une quelconque des revendications 8 à 10, **caractérisé en ce que** le dispositif de commande (11) est réalisé pour l'augmentation de l'excursion de tension (v) calculée de chaque convertisseur élévateur de tension (2) d'une valeur ($\Delta v$) définie.

**12.** Onduleur (1) selon l'une quelconque des revendications 9 à 11, **caractérisé en ce qu'**un dispositif de mesure de courant (24) est prévu pour la mesure du courant d'entrée ($I_{DC}$) de chaque convertisseur élévateur de tension (2), et que le dispositif de commande (11) est réalisé pour la modification du rapport cyclique minimal ($D_{min}$) du commutateur (18) de chaque convertisseur élévateur de tension (2) en fonction du courant d'entrée ($I_{DC}$) mesuré.

**13.** Onduleur (1) selon l'une quelconque des revendications 8 à 12, **caractérisé en ce que** le dispositif de mesure de tension (22) est réalisé pour la mesure de la tension d'entrée ($U_{IN}$) de chaque convertisseur élévateur de tension (2), le dispositif de mesure de tension (23) est réalisé pour la mesure de la tension de circuit intermédiaire ($U_{ZK}$) accompagnée de l'ondulation de tension ($\Delta U_{ZK}$) et éventuellement le dispositif de mesure de courant (24) est réalisé pour la mesure du courant d'entrée ($I_{DC}$) de chaque convertisseur élévateur de tension (2) pour l'acquisition de valeurs de mesure avec une fréquence d'échantillonnage ($f_A$), laquelle correspond à un multiple de la fréquence de réseau ($f_N$) de la tension alternative ($U_{AC}$), et à partir de cela pour le calcul de l'excursion de tension (v) et éventuellement du rapport cyclique minimal ($D_{min}$).

**14.** Onduleur (1) selon l'une quelconque des revendications 8 à 13, **caractérisé en ce que** la source CC (4) est formée par un module photovoltaïque (13), une éolienne (14) et/ou une batterie (15).

**15.** Onduleur (1) selon l'une quelconque des revendications 8 à 14, **caractérisé en ce que** chaque convertisseur élévateur de tension (2) est conçu de manière bidirectionnelle.

FIG. 1

FIG. 2

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2375552 A1
- US 20100157632 A1